# EUROPÄISCHE PATENTSCHRIFT

(11) **EP 3 377 847 B1**
(45) Veröffentlichungstag und Bekanntmachung des Hinweises auf die Patenterteilung: **18.08.2021**
(21) Anmeldenummer: 16798480.6
(22) Anmeldetag: 18.11.2016
(51) Int. Cl.: G01B 7/02, G01B 7/04, B23K 26/04

(54) **VERFAHREN ZUR ABSTANDSREGELUNG BEI DER LASERBEARBEITUNG**
METHOD OF DISTANCE CONTROL FOR LASER PROCESSING
PROCÉDÉ DE CONTRÔLE DE DISTANCE POUR LE TRAITEMENT AU LASER

(30) Priorität: 19.11.2015 DE 102015120105
(43) Veröffentlichungstag der Anmeldung: 26.09.2018
(73) Patentinhaber: Precitec GmbH & Co. KG, 76571 Gaggenau-Bad Rotenfels (DE)
(72) Erfinder: SPÖRL, Georg, 76287 Rheinstetten (DE); THIEL, Marc, 76532 Baden-Baden (DE)
(74) Vertreter: Ter Meer Steinmeister & Partner
(86) Internationale Anmeldenummer: PCT/EP2016/078123
(87) Internationale Veröffentlichungsnummer: WO 2017/085246

(56) Entgegenhaltungen:
- EP-A1- 1 784 281
- EP-A1- 2 546 598

## Beschreibung

Die Erfindung betrifft ein Verfahren zur Abstandsregelung bei der Laserbearbeitung unter Verwendung eines elektrischen Schwingkreises, dessen Schwingungsfrequenz vom Abstand zwischen einem Laserbearbeitungskopf und einem Werkstück abhängig ist. Für eine dynamische Abstandsregelung bei der Laserbearbeitung, insbesondere beim Laserschneiden oder Laserschweißen wird eine präzise Messung des Istabstands zwischen Laserbearbeitungskopf und Werkstück mit einer möglichst hohen Messrate benötigt.

Eine bekannte Art der Messung des Abstands zwischen Laserbearbeitungskopf und Werkstück oder genauer gesagt zwischen der Spitze der Düse des Laserbearbeitungskopfes, durch die der Arbeitslaserstrahl austritt und durch die gegebenenfalls Prozessgas in den Wechselwirkungsbereich zwischen Arbeitslaserstrahl und Werkstück mit hohem Druck strömt, und dem Werkstück ist die Auswertung der Kapazität zwischen Düsenspitze und Werkstück. Hierzu wird diese Kapazität in einen elektrischen Schwingkreis, insbesondere in einen LC-Schwingkreis eingebunden. Da die Kapazität zwischen Düsenspitze und Werkstück abstandsabhängig ist, ändert sich mit der Änderung des Abstands zwischen Düsenspitze und Werkstück auch die Frequenz des LC-Schwingkreises in Folge der Änderung der Kapazität. Um die Abstandsinformation aus der Frequenz des Schwingkreises zu extrahieren, wird die Frequenz der Schwingung üblicherweise für die Weiterverarbeitung unter Verwendung einer entsprechenden elektronischen Schaltung digitalisiert. Hierzu werden üblicherweise die Flanken des Messsignals, also des Ausgangssignals des LC-Schwingkreises innerhalb eines bestimmten Messintervalls gezählt. Dabei ist die Auflösung der Messung unter anderem von der Wahl des Messintervalls abhängig. Je kürzer das Messintervall gewählt wird, desto geringer ist die Anzahl der gezählten Flanken und entsprechend kleiner ist die resultierende Auflösung.

Wird also die Dauer des Messintervalls verkürzt, um eine hohe Messrate, also viele Messwerte pro Zeit zu erhalten, so ergibt sich immer ein Verlust an Auflösung. Wäre z. B. bei einem Messintervall von 1ms die Auflösung 250Hz so würde die Auflösung bei einem Messintervall von 0,25ms nur noch 1kHz betragen. Die Verkürzung des Messintervalls, die für eine hohe Messrate und eine hohe Dynamik der Abstandsregelung erforderlich ist, führt dann zu einer Verminderung der Messauflösung und in Folge davon insbesondere bei größeren Abständen zwischen Düse und Werkstück zu einer Abstandsmessung, die nicht so genau ist, wie bei der Verwendung eines längeren Messintervalls.

Aus der WO2012/022718A1 ist eine kapazitive und/oder induktive Abstandsmessung bekannt, die insbesondere beim Laserschneiden oder -schweißen eingesetzt wird. Hier wird das Ausgangssignal eines LC-Schwingkreises, in den die Kapazität und/oder Induktivität zwischen Düsenspitze und Werkstück eingebunden ist, zunächst einem Schwellwertgeber in Form eines Schmitt-Triggers zugeführt, der das periodische Ausgangssignal des LC-Schwingkreises in ein Impulssignal im Form eines Rechtecksignals umwandelt. Das Rechtecksignal wird über einen steuerbaren Schalter einem digitalem Zähler zugeführt. Der steuerbare Schalter steht mit einem Messtaktgeber in Verbindung, der den Schalter so ansteuert, dass dieser mit einer vorgegebenen Abtastrate geöffnet und geschlossen wird. Die Öffnung des Schalters ergibt dabei die Zeitdauer des Messintervalls, z.B. 1ms, während dessen die Impulse des Rechtecksignals dem Zähler zugeführt werden.

Um die Genauigkeit der Frequenzmessung und damit die Messgenauigkeit für den Abstand zu erhöhen, wird eine Triggerlogik verwendet, die das Messintervall mit den aus dem Ausgangssignal des LC-Schwingkreises erhaltenen Rechteckimpulssignals synchronisiert. Die Zeitdauer des Messintervalls, die aufgrund der Synchronisation frequenzabhängig und damit abstandsabhängig variiert, wird dann in einer Zeitmesseinrichtung mit einer Genauigkeit von typischer Weise ca. 100ps oder weniger bestimmt. Hier variiert also die Dauer des Messintervalls um die Schwingungsperiode der zu messenden Frequenz und muss entsprechend genau gemessen werden, um die Frequenz präzise ermitteln zu können. Die Messrate wird dabei nicht geändert.
Die EP 2 546 598 A1 (z.B. Basis der Präambel des Anspruchs 1) beschreibt ein Verfahren zur Abstandsbestimmung zwischen Werkzeugmaschine und Werkstück, bei dem unter Benutzung einer Linearisierungsfunktion die Frequenz eines Schwingkreises in einen absoluten Abstand zwischen einer Sensorelektrode und dem Werkstück transformiert wird. Hierfür werden als drei Parameter der symmetrischen Einstellung eine Verstärkung, eine untere Grenzfrequenz und eine obere Grenzfrequenz des Schwingkreises oder die Verstärkung, die obere Grenzfrequenz des Schwingkreises und die Periode der Schwingung einer Differenzfrequenz bestimmt. Um die Periode der Oszillation einer Differenzfrequenz bestimmen zu können, wird das Ausgangssignal des Schwingkreises an einen Frequenzmischer angelegt, dem eine Referenzschwingung von einem Referenzoszillator zugeführt wird. Das Ausgangssignal des Frequenzmischers enthält die Differenzfrequenz und die Summenkomponenten der Eingangsfrequenzen. Die Summenkomponenten werden mit einem Tiefpassfilter unterdrückt, während das Differenzfrequenzsignal einem Frequenzteiler zugeführt wird, dessen Ausgangssignal einer Datenverarbeitungs- und Steuereinheit zugeführt wird. Aus der Periode der Oszillation der Differenzfrequenz bei der unteren Grenzfrequenz und der Periode der Oszillation der Differenzfrequenz für die Schwingkreisfrequenz zur Abstandsmessung kann der Abstand unter Berücksichtigung der Verstärkung ermittelt werden.

Der Erfindung liegt die Aufgabe zugrunde, ein Verfahren zur Abstandsregelung bei der Laserbearbeitung unter Verwendung eines elektrischen Schwingkreises bereitzustellen, dass eine präzise Messung des Abstands zwischen einem Laserbearbeitungskopf und einem Werkstück mit für den Bearbeitungsprozess erforderlicher Messrate und Messgenauigkeit ermöglicht.

Diese Aufgabe wird durch das Verfahren nach Anspruch 1 gelöst. Vorteilhafte Ausgestaltungen und Weiterbildungen der Erfindung sind in den Unteransprüchen beschrieben.

Erfindungsgemäß erfolgt die für die Abstandermittlung erforderliche Frequenzmessung nicht durch Zählen von Flanken des Messsignals während eines Messintervalls, sondern die Periodendauer des Schwingkreissignals wird gemessen und der Abstand zwischen dem Laserbearbeitungskopf und dem Werkstück wird aufgrund der gemessenen Periodendauer des Schwingkreissignals ermittelt, so dass ein entsprechendes Abstands- oder Stellsignal an die Stellvorrichtung ausgegeben werden kann.

Durch Ausmessen der Periodendauer der Schwingung kann der Abstand zwischen Laserbearbeitungskopf und Werkstück mit hoher Genauigkeit in sehr kurzen Zeitintervallen von 0,25 ms oder kürzer ermittelt werden, um eine hohe Aktualisierungsrate und eine hohe Regeldynamik sowohl bei kurzen als auch bei größeren Abständen zwischen Laserbearbeitungskopf und Werkstück zu ermöglichen.

Um die Frequenzauflösung und damit die Genauigkeit der Abstandsbestimmung zu erhöhen, ist vorteilhafterweise vorgesehen, dass die Frequenz des Schwingkreissignals durch Frequenzteilung verringert und damit die Periodendauer eines aus dem Schwingkreissignal abgeleiteten Messsignals verlängert wird. Somit wird die für eine präzise Regelung des Abstands erforderliche Genauigkeit erzielt.

Zweckmäßigerweise wird die Periodendauer des aus dem Schwingkreissignal abgeleiteten Messsignals mittels eines Zeit-zu-Digital-Wandlers gemessen, dem auch ein Referenzsignal mit konstanter Frequenz zugeführt ist, und aus einer Abweichung der gemessenen Periodendauer des Referenzsignals von der bekannten festen Periodendauer des Referenzsignals wird ein Korrekturwert für die Periodendauer des Messsignals ermittelt. Hierdurch lassen sich äußere Einflüsse, insbesondere thermische Einflüsse auf die Abstandsmessung und Abstandsregelung vermeiden.

Die Dynamik der Abstandsregelung läßt sich weiter verbessern, wenn zur Ermittelung des Abstands zwischen dem Laserbearbeitungskopf und dem Werkstück der Zusammenhang zwischen der Periodendauer des Schwingkreissignals und dem Abstand in einer internen Tabelle gespeichert ist.

Zweckmäßiger Weise wird bei der erfindungsgemäßen Abstandsregelung ein als Schwingkreis ein LC-Schwingkreis eingesetzt, der mit einer Grundfrequenz im Bereich von 9 MHz bis 11 MHz, vorzugsweise im Bereich von 9,5 MHz bis 10,5 MHz insbesondere von etwa 10 MHz schwingt.

Die Erfindung wird im Folgenden beispielsweise anhand der Zeichnung näher erläutert. In dieser zeigt:
Figur 1 ein vereinfachtes schematisches Blockdiagramm einer Laserbearbeitungsvorrichtung mit einer Abstandsregelvorrichtung zur Durchführung des erfindungsgemäßen Verfahrens, und
Figur 2 eine Kennlinie eines kapazitiven Abstandssensors.

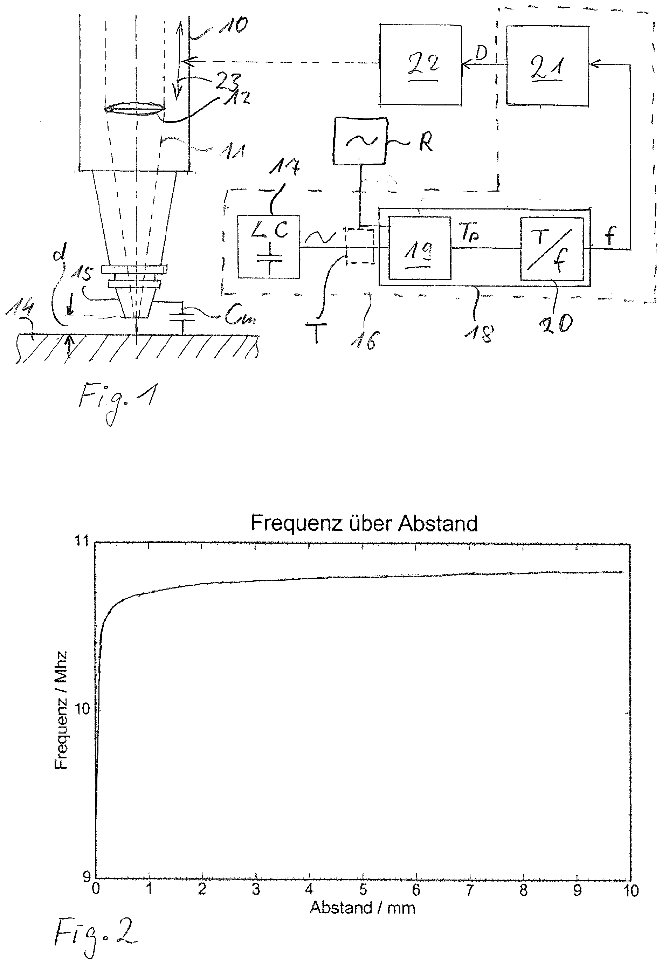

Figur 1 zeigt schematisch einen Laserbearbeitungskopf 10 einer Laserbearbeitungsvorrichtung, durch den hindurch ein Arbeitslaserstrahl 11 mittels einer Fokussieroptik 12 auf ein Werkstück 14 fokussiert wird. Um den Abstand d zwischen einer Düsenspitze 15 des Laserbearbeitungskopfes 10 und dem Werkstück 14 zu messen, ist eine Kapazität Cm zwischen Düsenspitze 15 und Werkstück 14 in einen Schwingkreis, insbesondere in einen LC-Schwingkreis 17 eines Abstandssensors 16 eingebunden. Zweckmäßiger Weise schwingt der im beschriebenen Ausführungsbeispiel eingesetzte LC-Schwingkreis mit einer Grundfrequenz von etwa 10 MHz. Die Grundfrequenz des LC-Schwingkreises kann auch aus einem Bereich von 9 MHz bis 11 MHz oder vorzugsweise einem Bereich von 9,5 MHz bis 10,5 MHz ausgewählt werden. Das von der Kapazität Cm zwischen Werkstück 14 und Düsenspitze 15 abhängige Ausgangssignal des LC-Schwingkreises 17 wird an eine elektronische Schaltung 18 geliefert, die die Periodendauer des analoge Frequenzsignal für die Abstandsmessung bestimmt.

Hierzu weist die elektronische Schaltung 18 einen Zeit-zu-Digital-Wandler 19 auf, der Zeiten, wie hier die Periodendauer des analogen Frequenzsignals, mit einer Genauigkeit im Pikosekunden-(ps)-bereich ermittelt. Der Zeit-zu-Digital-Wandler 19 nutzt dazu beispielsweise durch interne Gatterlaufzeiten hervorgerufenen Verzögerungen aus. Da die Gatterlaufzeiten stark temperaturabhängig sind, wird dem Zeit-zu-Digital-Wandler 19 nicht nur das Ausgangssignal des LC-Schwingkreises 17, der hier den Messoszillator darstellt, direkt oder über einen in Figur 1 gestrichelt angedeuteten Frequenzteiler T, sondern auch ein Referenzsignal mit konstanter Frequenz von einem Vergleichsoszillator R zugeführt. Dies kann bei einem zweikanaligen Zeit-zu-Digital-Wandler 19 gleichzeitig erfolgen. Ist nur ein Messkanal vorgesehen, kann dies auch nacheinander erfolgen.

Aus einer Abweichung der gemessenen Periodendauer des Referenzsignals von der bekannten festen Periodendauer des Referenzsignals wird ein Korrekturwert für die Periodendauer des am Zeit-zu-Digital-Wandler 19 anliegenden Messsignals ermittelt. Beispielsweise kann zu der gemessenen Periodendauer Tmg des Messsignals ein Wert ΔT addiert werden, der sich aus der Differenz der gemessenen und der bekannten Periodendauer des Referenzsignals Trg - Trb geteilt durch die gemessene Periodendauer des Referenzsignals Trg und multipliziert mit der gemessenen Periodendauer Tmg des Messsignals entsprechend der folgenden Gleichung ergibt: ΔT = Tmg * (Trg - Trb)/ Trg

Die tatsächliche Periodendauer Tm des Messsignals is dann: Tm = Tmg + ΔT
Wie in Figur 1 gestrichelt angedeutet ist, kann das Ausgangssignal des LC-Schwingkreises 17 dem Zeit-zu-Digital-Wandler 19 also auch über einen Frequenzteiler T zugeführt werden, um die Messperiode, also die Schwingungsperiode des am Zeit-zu-Digital-Wandler 19 anliegenden Messsignals zu verlängern, wodurch die Frequenzauflösung der Messung und damit auch Abstandsauflösung erhöht wird.

Das korrigierte digitale Zeitsignal Tp kann von dem Zeit-zu-Digital-Wandler 19 an einen Zeit-Frequenzwandler 20 geliefert werden, der aus dem Zeitsignal Tp ein digitales Messsignal der Frequenz des LC-Schwingkreises 17 erzeugt, das an einen elektronischen Schaltkreis 21 geliefert wird. Erfindungsgemäß wird jedoch das Zeitsignal Tp direkt an den elektronischen Schaltkreis 21 geliefert. Der elektronische Schaltkreis 21 könnte die Abstandsmformation aus der Frequenz des LC-Schwingkreises extrahieren. Gemäß der vorliegenden Erfindung wird direkt aus dem Zeitsignal Tp ein Abstandssignal D extrahiert und an eine Abstandsregelvorrichtung 22 geliefert, die ein entsprechendes Stellsignal für eine in der Zeichnung durch einen Doppelpfeil angedeutete Stellvorrichtung 23 erzeugt, die den Laserbearbeitungskopf 10 zur Einstellung und Regelung des Abstandes d zwischen Düsenspitze 15 und Werkstück 14 senkrecht zur Werkstückoberfläche verstellt. Der Zusammenhang zwischen der Frequenz des des LC-Schwingkreises 17 und dem Abstand oder der Zusammenhang zwischen Periodendauer und Abstand kann in einer internen Tabelle gespeichert sein.

Die Figur 2 zeigt ein Beispiel für eine Frequenz-Abstands-Kennlinie, also ein Beispiel für die Abhängigkeit der Frequenz eines LC-Schwingkreises 17, in den die abstandsabhängige Kapazität Cm zwischen Düsenspitze 15 und Werkstück 14 eingebunden ist, vom Abstand d zwischen Düsenspitze 15 und Werkstück 14. Die Kennlinie, also der funktionale Zusammenhang zwischen Frequenz und Abstand ergibt sich für jeden Laserbearbeitungskopf 10 individuell aufgrund seiner strukturellen Ausgestaltung, insbesondere aufgrund der geometrischen Ausgestaltung der Düsenspitze 15.

Ist die Düsenspitze 15 bei der Laserbearbeitung sehr dicht über dem Werkstück 14 angeordnet, so verhält sich die Messkapazität zwischen Düsenspitze 15 und Werkstück 14 nahezu wie ein idealer Plattenkondensator, so dass bereits kleine Abstandsänderungen bereits zu deutlichen Frequenzänderungen führen. Je weiter sich die Düsenspitze 15 jedoch vom Werkstück 14 entfernt, umso mehr machen sich Streukapazitäten bemerkbar, was sich darin äußert, dass bei großen Abständen zwischen Werkstück 14 und Düsenspitze 15 eine relativ große Abstandsänderung nur eine relativ kleine Frequenzänderung zur Folge hat. Mit anderen Worten haben kleine Abstandsänderungen relativ große Änderungen der Kapazität und damit der Frequenz zur Folge, wenn der Abstand zwischen Werkstück 14 und Düsenspitze 15 klein ist, während bei großen Abständen selbst relativ große Änderungen des Abstandes nur kleine Änderungen der Kapazität und damit der Frequenz zur Folge haben.

Bei einer praktischen Ausgestaltung der Erfindung wird die Frequenz des LC-Schwingkreises 17 durch Ausmessen der Periodendauer der Schwingungen des Messsignals durchgeführt. Wird beispielsweise die Periodendauer einer Schwingung bei einer Frequenz von 10 MHz, also 0,1 µs = 100 ns mit einer Genauigkeit von 100 ps gemessen, so ist die dabei erzielbare Messgenauigkeit +/- 0,1 %. Daraus folgt, dass bei der Ausmessung einer einzelnen Schwingungsperiode die Frequenzauflösung 10 kHz beträgt. Wird jedoch die Periodendauer durch Frequenzteilung, also durch Verringerung der Frequenz des Messsignals von 10 auf beispielsweise 1,25 MHz verlängert, so beträgt die gemessene Periodendauer der Schwingungen 0,8 µs und die theoretische Frequenzauflösung ist dann 1,25 kHz. Durch weitere Frequenzteilung sind weitere Verbesserungen der Frequenzauflösung möglich.

Verglichen mit der herkömmlichen Frequenzmessung durch Zählen der Signalflanken während eines festen Messintervalls, lässt sich die für die Messung benötigte Messzeit bei hoher Frequenzauflösung drastisch verkürzen. Die erzielbare Messrate wird daher in erster Linie durch die benötigte Rechenzeit und nicht durch die Dauer des eigentlichen Messintervalls entsprechend der Periodendauer des Eingangsmesssignals am Zeit-zu-Digital-Wandler 19 festgelegt.

## Patentansprüche

1. Verfahren zur Abstandsregelung bei der Laserbearbeitung unter Verwendung eines elektrischen Schwingkreises (17), dessen Schwingungsfrequenz vom Abstand zwischen einem Laserbearbeitungskopf (10) und einem Werkstück (14) abhängig ist, und einer Stellvorrichtung (23) zum Einstellen des Abstands (d) zwischen Laserbearbeitungskopf (10) und Werkstück (14), bei dem
- die Periodendauer des Schwingkreissignals gemessen wird, und
- der Abstand (d) zwischen dem Laserbearbeitungskopf (10) und dem Werkstück (14) aufgrund der gemessenen Periodendauer des Schwingkreissignals ermittelt und der Stellvorrichtung (23) zugeführt wird,
- **dadurch gekennzeichnet, dass** die Periodendauer des aus dem Schwingkreissignal abgeleiteten Messsignals mittels eines Zeit-zu-Digital-Wandlers (19) gemessen wird, dem auch ein Referenzsignal mit konstanter Frequenz zugeführt ist, und dass aus einer Abweichung der gemessenen Periodendauer des Referenzsignals von der bekannten festen Periodendauer des Referenzsignals ein Korrekturwert für die Periodendauer des Messsignals ermittelt wird.

2. Verfahren nach Anspruch 1, **dadurch gekennzeichnet, dass** die Frequenz des Schwingkreises (17) aus der gemessenen Periodendauer des Schwingkreissignals ermittelt wird, und der Abstand (d) zwischen dem Laserbearbeitungskopf (10) und dem Werkstück (14) aus der ermittelten Frequenz des Schwingkreises (17) extrahiert wird

3. Verfahren nach Anspruch 1 oder 2, **dadurch gekennzeichnet, dass** die Frequenz des Schwingkreissignals durch Frequenzteilung verringert und damit die Periodendauer eines aus dem Schwingkreissignal abgeleiteten Messsignals verlängert wird.

4. Verfahren nach einem der vorstehenden Ansprüche, **dadurch gekennzeichnet, dass** zur Ermittlung des Abstands (d) zwischen dem Laserbearbeitungskopf (10) und dem Werkstück (14) der Zusammenhang zwischen der Periodendauer des Schwingkreissignals und dem Abstand in einer internen Tabelle gespeichert ist.

5. Verfahren nach einem der Ansprüche 1 bis 4, **dadurch gekennzeichnet, dass** als Schwingkreis ein LC-Schwingkreis eingesetzt wird, der mit einer Grundfrequenz im Bereich von 9 MHz bis 11 MHz, vorzugsweise im Bereich von 9,5 MHz bis 10,5 MHz, insbesondere mit etwa 10 MHz schwingt.

## Claims

1. Method for distance control during laser machining, using an electrical oscillating circuit (17), the oscillation frequency of which is dependent on the distance between a laser machining head (10) and a workpiece (14), and an adjusting device (23) for adjusting the distance (d) between the laser machining head (10) and the workpiece (14), in which method
- the period of the oscillating circuit signal is measured, and
- the distance (d) between the laser machining head (10) and the workpiece (14) is determined on the basis of the measured period of the oscillating circuit signal and fed to the adjusting device (23),
- **characterized in that** the period of the measurement signal derived from the oscillating circuit signal is measured by means of a time-to-digital converter (19) to which a reference signal having a constant frequency is also fed, and **in that** a correction value for the period of the measurement signal is determined from a deviation of the measured period of the reference signal from the known fixed period of the reference signal.

2. Method according to claim 1, **characterized in that** the frequency of the oscillating circuit (17) is determined from the measured period of the oscillating circuit signal, and the distance (d) between the laser machining head (10) and the workpiece (14) is extracted from the determined frequency of the oscillating circuit (17).

3. Method according to claim 1 or 2, **characterized in that** the frequency of the oscillating circuit signal is reduced by frequency division, and the period of a measurement signal derived from the oscillating circuit signal is thus lengthened.

4. Method according to any of the preceding claims, **characterized in that**, in order to determine the distance (d) between the laser machining head (10) and the workpiece (14), the relationship between the period of the oscillating circuit signal and the distance is stored in an internal table.

5. Method according to any of claims 1 to 4, **characterized in that** an LC oscillating circuit which oscillates at a fundamental frequency in the range from 9 MHz to 11 MHz, preferably in the range from 9.5 MHz to 10.5 MHz, in particular at approximately 10 MHz, is used as the oscillating circuit.

## Revendications

1. Procédé de régulation de distance pendant l'usinage au laser, utilisant un circuit oscillant électrique (17) dont la fréquence d'oscillation est fonction de la distance entre une tête d'usinage laser (10) et une pièce (14), et un dispositif de réglage (23) pour régler la distance (d) entre la tête d'usinage laser (10) et la pièce (14), comportant les étapes consistant à :
- mesurer la période du signal du circuit oscillant, et
- déterminer la distance (d) entre la tête d'usinage laser (10) et la pièce (14) sur la base de la période mesurée du signal du circuit oscillant et la transmettre au dispositif de réglage (23),
- **caractérisé en ce que** la période du signal de mesure dérivant du signal du circuit oscillant est mesurée au moyen d'un convertisseur de temps en données numériques (19) auquel est également transmis un signal de référence à fréquence constante, et **en ce qu'**à partir d'un écart entre la période mesurée du signal de référence et la période fixe connue du signal de référence, une valeur de correction est déterminée pour la période du signal de mesure.

2. Procédé selon la revendication 1, **caractérisé en ce que** la fréquence du circuit oscillant (17) est déterminée à partir de la période mesurée du signal du circuit oscillant, et la distance (d) entre la tête d'usinage laser (10) et la pièce (14) est extraite de la fréquence déterminée du circuit oscillant (17).

3. Procédé selon la revendication 1 ou 2, **caractérisé en ce que** la fréquence du signal du circuit oscillant est réduite par division de fréquence et la période d'un signal de mesure dérivant du signal du circuit oscillant est ainsi allongée.

4. Procédé selon l'une des revendications précédentes, **caractérisé en ce que** la relation entre la période du signal du circuit oscillant et la distance est enregistrée dans une table interne afin de déterminer la distance (d) entre la tête d'usinage laser (10) et la pièce (14).

5. Procédé selon l'une des revendications 1 à 4, **caractérisé en ce qu'**un circuit oscillant LC est utilisé comme circuit oscillant qui oscille avec une fréquence fondamentale dans la plage de 9 MHz à 11 MHz, de préférence dans la plage de 9,5 MHz à 10,5 MHz, en particulier à environ 10 MHz.
